# EUROPEAN PATENT APPLICATION

(11) **EP 3 869 207 A1**
(43) Date of publication of application: **25.08.2021**
(21) Application number: 20159091.6
(22) Date of filing: 24.02.2020
(51) Int. Cl.: G01N 35/10, B01L 3/02

(54) **LARGE VOLUME SEPARATION SYSTEM**

(71) Applicant: Biotage AB, 751 03 Uppsala (SE)
(72) Inventor: GJERDE, Douglas T, Saratoga, CA California CA 95070 (US); ERIKSSON, Olof, 756 52 UPPSALA (SE); ESALA, Juha, 743 93 VATTHOLMA (SE); ASPLUND, Johan, 756 51 UPPSALA (SE)
(74) Representative: Brann AB

(57) **Abstract**

The present invention is an automated separation system comprised of a liquid handling device and one or more pipette tip columns, wherein the liquid handling device is equipped with two or more nozzles arranged to respectively receive a pipette tip column. Further, the system includes means for applying either high positive or negative pressure to the column inside chamber above the column bed, enabling aspiration and dispensing into and out of each pipette tip column. To enable sealing to the pressures used to move liquid through the column bed without inadvertently ejecting the column from the nozzle during the separation process, each nozzle has been provided with at least one annular protrusion arranged to engage with the inside of a substantially evenly tapered pipette tip column, without any corresponding recess.

## Description

### Technical Field

The present invention relates to a separation system capable of handling pipette tip columns in automated fashion. More specifically, the packed pipette tip columns used according to the invention in which both the chamber and chromatographic bed are of a relatively large volume having high backpressure or resistance to fluid flow puts requirements of sealing and repeatability on the system. The present invention also relates to a method of using the system according to the invention in the separation of biomolecules in methods which advantageously process larger volumes of liquid than conventional pipetting methods.

### Background

Manual liquid handling equipment including pipette tips have been used extensively in laboratories to transport a measured volume of liquid since the 1960's, when the company Eppendorf was founded in Germany. Since then, the technology has constantly evolved to enable new applications.

US 6,197,259 (Rainin Instruments Co, Inc.) relates to pipette tips described as easily ejectable. More specifically, the '259 patent describes problems in manual pipetting associated with the ejection of the conventional 'hoop stretch' pipette tips, which are mounted on shafts by stretching the pipette tip material to fit the shaft. To enable a lower force for ejection of a pipette tip, and thereby making them more suitable for ejection by a human thumb pressure, the '259 patent proposes a pipette tip which is not evenly tapered, but which includes a specifically designed annular sealing region which stretches radially outwardly as mounted on a shaft, but which is not tapered in its longitudinal direction.

US 6,596,240 (Porex Corporation) relates to the area of pipette tips which includes sealing bands. It is described in the '240 how removal of such tips can be difficult, and over many uses during a day, fatigue and even injury over time result. A need is therefore expressed for a method for producing a pipette tip that can be inserted and ejected with a minimal force, maintain a good seal, and provide for a good fit on a variety of pipettes. Also, a need is expressed for a method of forming relatively large and resilient rings on the internal sealing surface of the pipette tip. Typically, the size of an internal ring is limited since it is "undercut" in the mold that forms the tip. In order to remove the part from the mold, it must expand for the ring to be released from the groove on the mold core that forms it. This limits its size and can "smear" the ring as it is removed.
As a solution to the problems expressed, the '240 patent proposes a solution where the tip member comprises an elongated tubular receptacle having a central axis, a protrusion on an inner surface of the receptacle, and a recess on the inner surface adjacent the protrusion. The tip member can have a generally conical shape and the inner surface is tapered from a rear opening at a proximal end to a tip opening at a distal end.

US 2012/0180579 (Perkin Elmer Health Sciences, Inc) relates to large volume pipette tips for loading in an automated liquid handler. More specifically, the '579 patent application describes how problems arise as micropipettes are increased in size, especially as the larger sizes turn out to be difficult to fit next to each other in parallel processing in tray format. As a solution, the '579 patent application proposes a pipette tip the central portion of which includes an enlarged chamber, such as a rectangular chamber, designed to hold larger volumes than conventional pipette tips while fitting in the same liquid handler as the micropipettes. In this context, a 'large' volume as referred in the '579 patent application refers to volumes of about 5 mL and above, though it is stated that for even larger pipette tips, the skilled person will immediately appreciate the changes that would be required.

US 2017/0211129 (Phynexus, Inc.) relates to devices and methods for plasmid purification, and describes pipette tip columns and automated methods for such purification. More specifically, a need is expressed in the '129 patent application for large-scale automated and parallel plasmid preparation, since in practice, when transfection is used in recombinant DNA techniques to obtain protein expression, microgram to milligram amounts of plasmid DNA are usually required. To get these large quantities of plasmid DNA, most researchers perform manual plasmid purifications using spin columns, or columns operated via vacuum or gravity. As a solution, the '129 patent application proposes an automatable method for purifying nucleic acids in a pipette tip column format, which may comprise the steps of: (a) providing a cell lysate comprised of cell debris, liquid and plasmid DNA;(b) providing a column, wherein the column is capable of plasmid DNA capture;(c) providing a filter apparatus comprised of a filter;(d) passing the cell lysate through the filter apparatus to produce a filtrate;(e) passing the filtrate through the column, wherein a portion of the plasmid DNA in the filtrate is captured on the column;(f) passing a wash solution through the column; and(g) eluting the plasmid DNA by passing a desorption solution through the column, wherein the amount of plasmid DNA eluted from the column is at least 750 µg, wherein steps (e) through (g) are performed at predetermined times. In the examples, step (d) is illustrated using pipette tip columns processed by a ME semi-automated purification system (PhyNexus, Inc., San Jose, Calif.), wherein the columns were equilibrated with 200 µL 7M guanidinium-HCI by performing one cycle of back-and-forth flow at 500 µL/min and a 20 second pause at the end of the aspirate and dispense steps. The ME semi-automated purification system is designed for PhyTips, which are available from Biotage AB/Phynexus Inc in volumes up to 20000 µL (20 mL). As alternatives, it is stated in the '129 patent application that the method was designed to operate on a Tecan EVO, Biomek FX or other robotic liquid handler.

In summary, there is still a need in the area for improved automated liquid handling systems and such systems capable of mounting and ejection of packed pipette tips known as pipette tip columns, which may have been packed e.g. with chromatography media or extraction media, such as SPE or SLE media, especially large volume pipette tip columns packed with large volumes of media.

### Summary of the Present Invention

The present invention is directed to fulfill one or more of the needs expressed above.

Thus, a first aspect of the invention is an automated separation system comprised of a liquid handling device and at least one pipette tip column, wherein the liquid handling device is equipped with one or more nozzles, such as two or more, each nozzle being arranged to receive a pipette tip column, and means for applying either positive or negative pressure enabling aspiration and dispensing into and out of each pipette tip column, in which system each nozzle has been provided with at least one annular protrusion.

A second aspect of the invention is a method of separating a biomolecule from a liquid sample using the system of the invention, wherein the sample is aspirated into each such packed pipette tip column; biomolecules of the aspirated liquid sample are allowed to bind to the separation media for a period of time; and the liquid sample comprising any unreacted biomolecules is dispensed from the pipette tip column.

A third aspect of the invention is a kit for separating a biomolecule from a liquid sample using a separation system according to the invention, which kit comprises a 20-40 ml pipette tip column with a 4-20 mL bed volume packed with chromatography media, such as affinity media; or extraction media, such as solid phase extraction (SPE) media or supported liquid extraction (SLE) media. The kit also comprises, in a separate compartment, written instructions for performing such separation.

Column bed volumes of 1 - 8 mL, or 1, 2, 3, 4, 5, 6, 7 or 8 mL may be packed in tip volumes of 20 - 40 mL. In other embodiments, tip volumes containing packed beds may be 20 - 50 mL, 20 - 60 mL, 30 - 70 mL, 30 - 80 mL, 40 - 90 mL, 40 100 mL, or 50 - 200 mL. Packed bed volumes may be 1- 50 mL, 2-40 mL, 3 - 30 mL or 4 - 20 mL.

Further details, advantages and examples of the invention will appear from the dependent claims as well as from the appended specification including its examples.

### Definitions

Pipette tip: Plastic tube of various shapes from which liquids are aspirated and dispensed through connection with a pipette. This definition includes syringe tips.

Pipette tip volume: The maximum volume that a pipette tip can contain.

Packed pipette tip column: Pipette tip with separation media positioned within the inside of the tip, generally placed at the distal end of the tip. Pipette tip columns may be configured from a pipette tip, syringe or similar materials.

Pipette tip column bed: The bed of separation media placed inside of a pipette tip column. It is generally described in terms of volume of the bed.

Packed bed of the pipette tip column: The media with frits generally located on the bottom distal end of the tip and a frit above the media bed. The frit above the media bed may be directly above the bed or may be positioned with a gap above the top of the bed.

Pipette tip column bed volume: The volume of bed of separation media, generally described in µL or mL.

Pipette tip column chamber: The volume in a pipette tip column above the column bed.

Chamber volume: The volume above the top of the bed in the pipette tip column.

Pipette tip pump: A pump that has been configured to pump one or more fluids by vacuum or pressure through a pipette tip column.

Pump nozzle: The movable part of a pump that provides the seal to a pipette tip column. In the area of separation, nozzles are sometimes denoted 'shafts'.

Annular protrusion: The ridge or raised surface on the pump nozzle that provides a seal to the pipette tip column

Pipette tip column chamber pressure or vacuum: The positive or negative air pressure that forces liquid to flow through the pipette tip column during aspiration and dispensing, respectively.

Pipette tip column aspiration fluid flow: Flow into the pipette tip column into the chamber above the column bed.

Pipette tip column dispensing fluid flow: Flow out of the pipette tip column from the chamber above the column bed.

Pipette tip column backpressure: The resistance to liquid flow through the column when vacuum or pressure is applied to the column chamber.

Pipette tip column exit: The distal end of the pipette tip column.

Distal end: End of the pipette tip, syringe tip, pipette tip column or syringe tip column away for the point of connection to the pump.

### Brief Description of the Drawings

Figure 1 shows an illustrative set of a high sealing pipette pump and pipette tip column, illustrating how the seal of the nozzle against the column provides internal chamber pressure and vacuum sealing.
Figure 2 shows an illustrative pump nozzle bottom with annular ridge, tip column top and slide ejector.
Figure 3 shows a tip column top positioned onto pump nozzle bottom, and protrusions in the form of an annular ridge provides and air and vacuum sealing inside column chamber above the bed.
Figure 4 shows a pump nozzle bottom provided with two annular ridges, tip column top and slide ejector.
Figure 5 shows a pipette tip column top positioned onto pump nozzle bottom.
Figure 6 shows how slide ejector means may be used to remove a pipette tip column from a pump nozzle in accordance with the invention.

### Detailed description of the invention

In a first aspect, the present invention relates to an automated separation system comprised of a liquid handling device and at least one pipette tip column, wherein the liquid handling device is equipped with one or more nozzles, such as two or more, each nozzle being arranged to receive a pipette tip column, and means for applying either positive or negative pressure enabling aspiration and dispensing into and out of each pipette tip column, in which system each nozzle has been provided with at least one annular protrusion.

In this context, it is to be understood that the term 'liquid handling device' refers to well known devices in the area of bioprocessing of liquid samples. Thus, it may include any standard type feature to enable its operation including appropriate software that controls its performance.

The term 'automated' means herein that the system is capable of performing all or at least some of the standard operations discussed below in an automated fashion. Specifically, at least the mounting as well as the ejection of the pipette tip columns to and from the nozzles are performed automatically, allowing for the forces discussed in more detail below.

The annular protrusion(s), which are provided on the part of each nozzle that will be in contact with a mounted pipette tip column, will be described in further detail below, in relation to the description of the drawings. In the area of liquid handling, the term 'nozzle' is sometimes replaced by a shaft, or a head of a manifold.
In brief, the present protrusion(s) may advantageously be provided as the nozzles are manufactured, as integral parts thereof. Alternatively, the protrusion(s) may be attached at a later stage. In any case, the term 'provided with protrusions' means herein that the protrusions are fixed in place, as opposed e.g. to an added O ring. The nozzles as such may be molded and manufactured according to standard processes from any suitable plastic or other rigid and non-reactive solid material.
Thus, each nozzle of the present system may be provided with one, or two, annular protrusions, both of which are arranged in sealing engagement with a mounted pipette tip column capable of holding a liquid volume of for example at least about 20 mL, such as in the range of about 20 to about 40 mL of liquid. In one example, a pipette tip column is arranged for holding about 2 ml of packed bed at its distal end, and about 18 ml of liquid in the chamber volume above the packed bed.

The pipette tip columns are of conventional design, such as evenly or substantially evenly tapered plastic pipette tips capable of holding at least 20 mL of liquid in the chamber volume. In some embodiments of the invention, at least 40 mL of liquid can be held. In some embodiments of the invention at least 50 mL, 60 mL, 70 mL, 80 mL, 90 mL, 100 mL, 150 mL, and 200 mL of liquid can be held. As the skilled person will appreciate, as the packed bed of separation media held between frits is relatively small in comparison with the herein-discussed liquid volumes, the present figures may be understood as either including, or excluding, the packed bed, in different embodiments. In either case, the present invention is capable of automatically managing substantially larger volumes than the prior art suggested for the separation of biomolecules, such as plasmids.

Any plastic or polymeric material may be envisaged for the pipette tip columns, as long as they are made sufficiently rigid to withstand the herein described pressures and are non-reactive in view of the liquids and reagents commonly used in the separation of biomolecules.

Now, the present inventors have unexpectedly found that by providing the nozzles of the liquid handling device with protrusions, as opposed to prior art which frequently suggests that the pipette tips are provided with engagement features, such as recesses and protrusions, it was possible to both mount and eject pipette tip columns of conventional design using manageable forces without leakage or premature loss of the pipette tip columns. This was surprising in relation to the large bed volumes of the pipette tip columns used, commonly holding about 20 to about 40 mL of chamber liquid, which were found to be difficult to mount easily in view that the tip column will also eventually have to be ejected without problems. As the skilled person will appreciate, for specific circumstances, such as if an additional security is desired, or if higher pressures and/or much larger volumes are envisaged, one or more conventional O rings may be included in the engagement between nozzle and pipette tip column.

In some embodiments of the invention, a 2-3 pound (0.9-1.6N) downward force is required to remove the pipette tip column form the pump nozzle. In some embodiments, a 2-10 pound (0.9-4.7N), 3-9 pound (1.6-4.2N) or a 4-8 (0.8-1.4N) pound force is required to remove the pipette tip column from the pump nozzle. This nozzle is described as the first generation nozzle in Example 2.

In other embodiments of the present system, each pipette tip column is mountable to a nozzle using a force in the range of from about 50N to about 160N.

In further embodiment, each pipette tip column of the present system is releasable by ejection using a similar force, i.e. in the range of from about 50N to about 160N. The ejection mechanism must be able to push the column completely from nozzle. The column must completely clear the nozzle so that in automated robotics it is certain that the column did not partially eject and cause the robotic liquid handler to crash. In some specific embodiments of the invention, a 3.5 pound (1.6 N) force is required to remove the pipette tip column from the pump nozzle.

As the skilled person will appreciate, the forces required for mounting and ejecting the column will be impacted by the specific design of the protrusion(s) of each nozzle. As appears from the present description, a system according to the invention will comprise one or more protrusions, such as one protrusion, on each nozzle, while - contrary to the prior art - the pipette tip column is defined by an even slope i.e. it has not been provided with any recess corresponding to each nozzle protrusion. Without deviating from that gist of the invention, embodiments are possible where for example one protrusion only is provided on each nozzle. In such embodiment, the sole protrusion may be slightly larger than if two or more protrusions are provided on a nozzle. Thus, as the skilled person will appreciate, the forces required to mount and/or release each pipette tip column will vary depending e.g. on the number and/or shape and dimension of the nozzles. Following the principles described herein, the skilled person will be able to run simple tests to arrive at optimal forces for efficiently sealing the pipette tip columns to the nozzles; and for removing the same by simple ejection once the separation process has been completed.
Thus, deviations from the above defined ranges may also be embraced by the invention as defined by the present claims.
The pipette tip columns may be ejected one at the time; or at the same time; and optionally, their outer surfaces may be provided with means that facilitates their ejection. Such means may for example by an outer ridge or other protrusion, which can be used to automatically push loose the pipette tip column.

An advantage of the present invention is the pump that enables the above-discussed mounting and ejection of large packed pipette tip columns from their respective nozzles, including an efficient sealing during processing as well as simple automated ejection without the requirement of manual intervention. In this context, large is understood as being of 20 mL or larger, as also discussed throughout this application.

The preferred pump of the present automated separation system is a piston pump, which is arranged using flexible lips to seal tight as well as release pressure, as required at each stage. Piston pumps suitable for the present purpose are well known in the field, and includes elements such as a pump cylinder, a pump piston, a cylinder space, a pressure sensor, and a pressure channel. Starting from such a conventional pump, the present inventors have provided means for sealing that enables the processing of the volumes of liquids discussed herein. More specifically, the present means for sealing may be made of a suitable material, such as flexible plastic or rubber. Further, to allow for the responsiveness required to hold and release pressure, respectively, such sealing means may be flexible lips which advantageously have been provided with an appropriate lubricant. Sealing lips may be arranged between the pump piston and the cylinder space at one or more vertical locations, such as annular lips surrounding the piston at a first and a second vertical distance from its end.

Consequently, a specific aspect of the present invention is a method of mounting and/or ejecting a large pipette tip column, such as a 20-40 mL pipette tip column, to a nozzle arranged on the liquid handling device of the present system using the forces discussed above.

The system according to the invention may comprise at least 2 independently arranged pipette tip columns, such as 2-4 columns, which are moveable in relation to each other. In this context, the term 'independently arranged' means that the pipette tip columns are not arranged in a tray or plate kind of format, but rather like larger tubes of conventional liquid handling systems. The method of operation will decide to what extent such independently arranged pipette tip columns are operated in parallel, or one by one.

As indicated above, and as described in detail by the appended drawings, each pipette tip column is substantially evenly tapered and arranged to provide a tight seal between the inner surface of the pipette tip column and the nozzle. Advantageously, to improve said seal, the pipette tip columns may have an inner diameter which is smaller than the outer diameter of the nozzle. Such fit has been described in the area for micropipettes, and is well known to the skilled person in the field.

Advantageously, the seal between each nozzle and its respective pipette tip column maintains a pressure and vacuum sealing with the pipette tip column distal end blocked for about 5 minutes or greater with less than 5% pressure or vacuum loss Such pressure or vacuum loss may be measured using well known techniques in this field.

In the system according to the invention, the means for applying pressure to the pipette tip column(s) may be provided by an electrical motor. Such drive means are well known in the field, and commercially available for commonly used liquid handling devices.

Separation of biomolecules may advantageously be obtained by packing a pipette tip column with separation media capable on interacting and retaining target molecules. Thus, in the system according to the invention, each column may comprise packed separation media, such as chromatography media or extraction media, such as solid phase extraction (SPE) media, supported liquid extraction (SLE) media, affinity media, ion exchange media, reverse phase media, normal phase, chaotropic phase media, hydrophobic interaction media, hydrophilic interaction media and other chromatographic media. These chromatography media are well known to the skilled person, and readily available from commercial suppliers.

The present separation media is advantageously held in place by arranging frits i.e. filters on each side of the packed media, at the top and at the bottom of the pipette tip column, as is conventional in the area of liquid sample processing of biomolecules and other molecules, such as large organic molecules. Reference is made in this context e.g. to US 2017/0,211,129 (Phynexus, Inc.), wherein packed pipette tip columns are described in detail including the nature of such frits, packing level etc. The skilled person can easily pack a pipette tip column either based on such reference, or simply using common general knowledge and the recommendation of suppliers. In the present system, the media should advantageously be provided as a packing i.e. held in place, as opposed to a fluidized bed of media.

Further details provided below and throughout this specification with regard to the second and third aspect of the present invention are equally applicable to this first aspect.

In a second aspect, the present invention relates to a method of separating a biomolecule or an organic molecule from a liquid sample using the system according to the invention. The method may be a method of sample preparation or 'sample prep', commonly known to be used as a step preceding analysis of a target molecule. In such sample prep methods, the media may either remove contaminants from a liquid sample; or it may separate a target molecule from the rest of the liquid sample.

Thus, in one mode, the method of the invention may comprise a first step of aspirating the sample into each packed pipette tip column of the present system; and a second step of dispensing a purified liquid sample from the pipette tip column. In this mode, the dispensed liquid will include the target molecule in a much cleaner environment than before the processing in the pipette tip column.

In another mode, the present method comprises an additional step of aspirating an eluent into each packed pipette tip column; allowing the eluent to release target molecules from the separation media; and dispensing the eluent including released target molecules from the pipette tip column.

The separated biomolecules, i.e. the targets of the methods, may be selected from the group consisting of proteins, such as antibodies; protein fragments, such as antibody fragments; peptides; and nucleic acids, such as linear DNA, linear RNA, oligonucleotides, genomic DNA or plasmids. Advantageously, the present method is used in the separation of plasmids intended fort subsequent use in recombinant DNA technologies, where large quantities of plasmids are used as vectors. The targets of any method of the invention are separated in the present method from other components of the sample such as other biomolecules, i.e. proteins, peptides, components of cell debris, DNA and RNA; and from nutrients and other components originating from a fermentation broth wherein the target biomolecule was produced.

Depending on the intended use of the separated target biomolecule, the present method may be used as such, as a single step of separation; or as part of a purification protocol in which case it may be combined with a step of filtering, centrifugation etc. For example, a step of filtration e.g. gravity filtration may precede the processing in the pipette tip columns in accordance with the invention. As the skilled person will appreciate, depending on the nature of the starting material, conventional processing steps such as lysis of cells and removal of cell debris etc., for example by centrifugation may be included in embodiments of the method according to the invention.

As discussed above in relation to the system of the invention, an advantage of the invention is that the seal between nozzle and pipette tip column unexpectedly was shown to withstand the high pressures required for positive processing of large volumes of liquid. Thus, in the present method, a positive pressure of 3-5psi, such as 4-5 psi, may be applied to the pipette tip column without substantially impairing the sealing of each nozzle a pipette tip column. In some embodiments of the invention, a positive pressure of 2 - 15 psi may be applied to the column chamber without leakage of the pressure over at least 5 minutes and without exposition of the pipette tip from the pump nozzle. In some embodiments a vacuum of 1-10 psi may be applied to the column chamber without leakages of the vacuum over a period of at least 5 minutes. Absence of leakage is defined as no greater than 5% change.

All details provided in this specification with regard to the first aspect are applicable also to this second aspect of the invention.

In a third aspect, the invention relates to a kit for separating a biomolecule from a liquid sample using a separation system according to the invention. The kit of the invention may comprise a large volume pipette tip column, such as a 20-40 mL volume, packed with chromatography or solid phase extraction (SPE) media and, in a separate compartment, and written instructions for performing such separation.
Further, the present kit may include, in separate compartments, one or more of an equilibration buffer; a wash liquid; and an eluent, all of which are well known to the skilled person and commercially available.
In understanding the third aspect of the invention, all details provided in this specification with regard to the first and the second aspect are applicable.

In some embodiments of the invention the sealing mechanism of the pump nozzle provides tight fit of pipette tip to pipette tip column even with internal column pressures up to preferably 5 psi. In some embodiments of the invention, the column remains sealed and attached to the pump nozzle with internal column pressures in the range of 4-6 psi, 3-7 psi, 3-8 psi, 3-10 psi. or greater than 10 psi, 20 psi, 30 psi, 40 psi or 50 psi. The column seals against the pump nozzle to negative 2 psi, 3 psi, 4 psi, 5 psi, 6 psi, 7 psi, 8 psi, 9 psi or 10 psi. Remains sealed is defined as maintain pressure without 5% leakage or more for a period of 2 min, 3 min 4 min or 5 min.

As discussed above, the sealing of the nozzle against the inside head of a pipette tip column is provided with an annular protrusion, such as a ring or pip. In this context, it is to be understood that the term "annular" means herein that the protrusion is arranged around substantially all of the nozzle circumference. However, any embodiment which includes minor interruptions or deviations from such "annular" shape is intended to be embraced by the present invention, as long as the advantageous and efficient sealing discussed herein is obtained. Such a ring will provide a very tight force against the head of the column so that air or vacuum cannot leak past the nozzle. Maintaining internal pressure or vacuum is essential to maintain reliable and predictable flow in and out the column. If any leakage occurs, liquid will still flow into or out of the column, but the flow is unpredictable and incomplete. Predictable flow is especially needed for robotic liquid handlers. Complete flow is needed for complete capture, washing and elution of the sample from the column.
In other embodiments of the invention, the diameter of the pump nozzle is increased so that at least a portion of the nozzle provides a very tight fit to the column. In other embodiments of the invention, an O-ring or similar sealing device is added to nozzle to provide a tight seal of the pump nozzle to the pipette tip column.

All of these sealing mechanisms to increase the sealing provides the problem of being able to eject the column easily and predictably from the column nozzle. In pipette technology, the ejection is performed by hand force. An electric actuator can provide additional force, however the ejection mechanism must be even and forceful without damaging the top ejection ledge of the pipette tip column. This is because during use, it may be necessary to load and eject the pipette tip column more than one time, up to 5, 10 or 20 times.

### Detailed Description of the Drawings

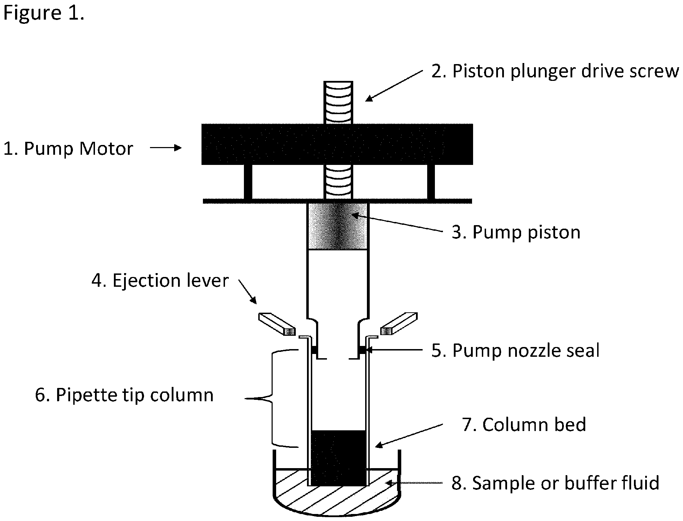

Shown in Figure 1 is the high sealing pipette pump and column of the automated separation system according to the invention. More specifically, Figure 1 shows a pump motor 1; a piston plunger drive screw 2; a pump piston 3; ejection means here illustrated with ejection lever 4; pump nozzle sealing means 5 here illustrated with a single protrusion of the nozzle; a pipette tip column 6; a column bed 7; and finally an illustrative vessel comprising a liquid that may be aspirated such as sample or buffer fluid 8.
The seal of the nozzle against the column arranged in accordance with the invention provides for efficient pressure and vacuum. For example, sealing of 5 minutes or greater with less than 5% pressure or vacuum loss.

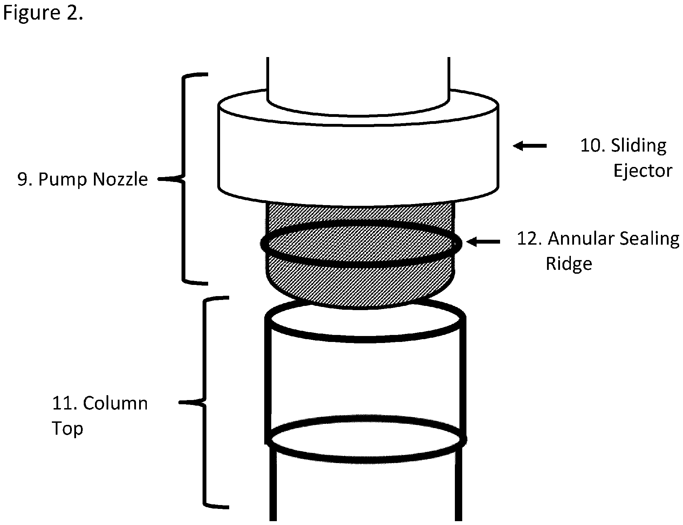

Figure 2 is a closer view illustrating the arrangement of pump nozzle bottom 13, pipette tip column top 14 and slide ejector 15 are shown. More specifically, the pump nozzle 9; sliding ejector 10; pipette tip column top 11; and a protrusion in the form of an annular sealing ridge 12 are shown.
The illustrative annular protrusion provides additional force against the inside wall of the pipette tip column top which in turn provides an advantageous sealing force. The sealing force is advantageously uniformly arranged across the entire inside surface to prevent the leakage of air, as even small micro scratches or imperfections may allow air to escape and prevent adequate sealing.

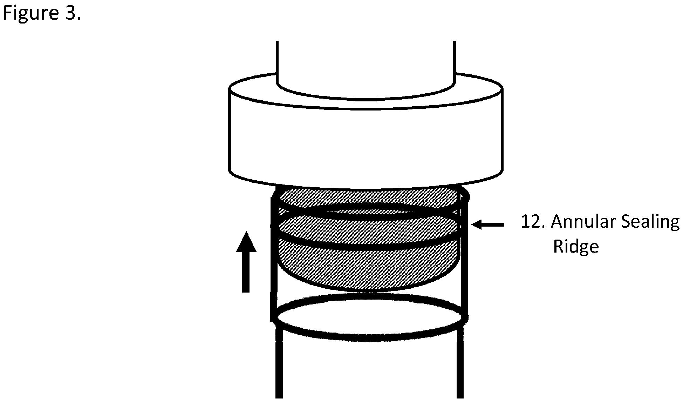

Figure 3 shows a pipette tip column top 11 positioned onto pump nozzle bottom. Sealing means 5 in the form of an illustrative annular protrusion provides and air and vacuum sealing inside column. As a supplement to the nozzle design including protrusions according to the invention, further improved sealing includes increasing the diameter of the nozzle and/or using a tight fitting O-ring.

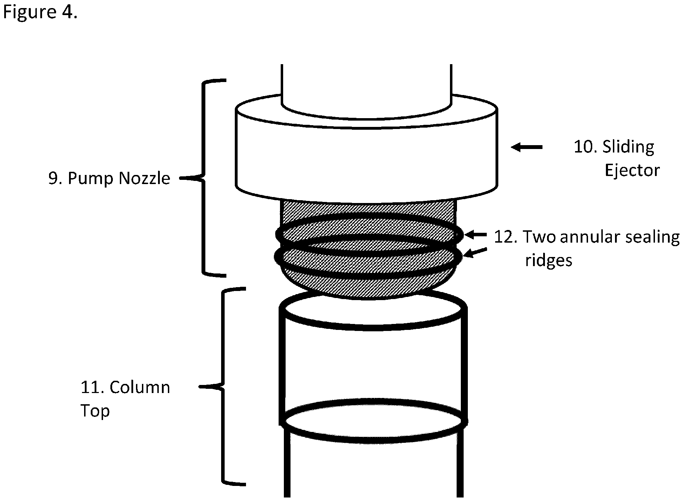

Figure 4 shows an alternative embodiment of an automated separation system according to the invention, wherein a pump nozzle bottom 13 is arranged with two annular protrusions in the form of sealing ridges 12, tip column top and slide ejector.

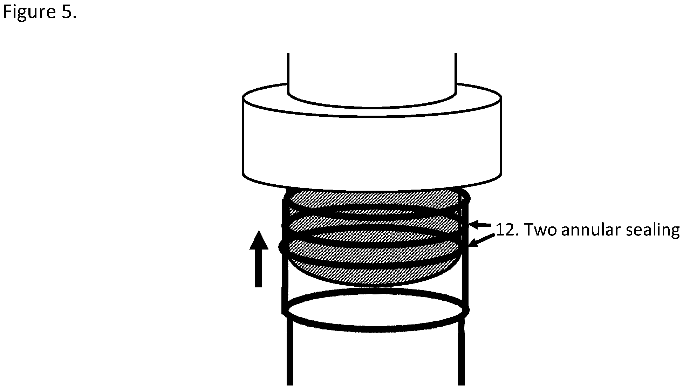

Figure 5 shows a pipette tip column top positioned onto pump nozzle bottom with strong force. In this illustrative embodiment, two annular ridges 12 provide vacuum sealing inside column chamber above the bed.

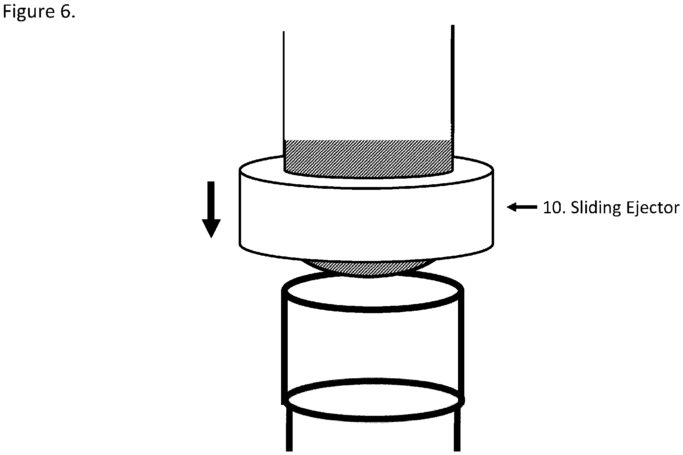

Figure 6 shows how a slide ejector may remove a pipette tip column top with strong force from pump nozzle.
A slide ejector removes column top with strong force from pump nozzle. It is difficult to eject the pipette tip column from the pump nozzle. Levers could be used to eject the column as depicted in Figure 1. However, the ejector must not deform the top of the plastic top of the pipette column. The pipette tip columns must be loaded and ejected several times in a purification method.

### EXPERIMENTAL PART

The present examples are provided for illustrative purposes only, and should not be construed as limiting of the invention as defined by the appended claims. All references provided below or elsewhere in the present specification are hereby included herein via reference.

### Example 1 - Plasmid purification

### Materials

An automated separation system according to the invention was used for plasmid purification. More specifically, the instrument was provided with two nozzles having one annular protrusion each as described herein loaded with columns, samples, vials and tubes, and buffers. A packed bed of media was prepared by filling the pipette tip columns with 4 mL bed of DEAE weak base anion exchange resin based on a polyacrylate substrate. The column hardware containing the so prepared 4 mL bed was constructed using a 20 mL pipette tip, placing the packed bed at the distal end of the column. The sample consisted of a 5 gram *E coli* cell pellet containing expressed plasmid. The sample was dispersed in a TRIS buffer, lysed with 1M NaOH and SDS surfactant to form a suspension of cell debris and dissolved plasmid. RNase was added the mixture. The buffers that were added were color coded and prepackaged so that no measurement of volume or mass was needed during the entire process of sample preparation. Then the sample was poured into the filtering sample reservoir and the instrument process initiated. The filtering removes most of the particulate through gravity filtering. The particulate removed depends on the process. In plasmid capture, proteins, cell debris, genomic DNA and other materials are removed while plasmid remains in solution and passes through the filter in the filtrate. The filtering process will take up to an hour, but was initiated directly after the filtering has been initiated. The sample was aspirated, transferred by pipette to six 50 mL conical tubes containing equal amounts of filtrate. The pipette tip column was inserted into each conical tube containing the sample and plasmid captured in series with a back and forth flow process until the entire sample filtrate was processed. It is possible to process the sample directly from the filtrate from the sample reservoir. In this case, the pipette tip column is inserted into the reservoir and filtrate is aspirated. Then the column is moved to a conical tube and the sample aliquot is processed with back and forth flow. Alternatively, the sample is aspirated to waste and the capture is performed with a single aspiration and dispensing of sample through the pipette tip column bed. These processes are repeated until all of the sample filtrate is processed. The equipment including all columns, buffers, vials and filtering reservoir were obtained from Biotage AB (Uppsala, Sweden).

### Method

All operations described are performed using the automated separation system according to the invention including annular protrusions on the nozzles.

### General procedure:

1. Filter the precipitated cell lysate containing dissolved plasmid to produce semi clear lysate. The dissolved plasmid remains in the filtrate.
2. Add a proprietary endotoxin removal buffer to semi clear lysate and incubate. This binds the endotoxin and prevents capture of the endotoxin on the DEAE anion exchange column.
3. Equilibration for 30 - 60 min at room temperature.
4. Transfer semi clear lysate. The incubated sample is transferred to a falcon tube. In 15 mL aliquots. 10 tubes are prepared for capture in the next step.

### Capture:

The anion exchange column is placed into the sample conical tube and the sample is drawn up into the column and expelled (aspirated and dispensed) 4 cycles at the rate of 400 mL/min. Aspirate 12 mL at 400 mL/min, and delays 45 sec. Expel 2 mL at 400 mL/min and delay 15 sec for 6 times. A delay is added at the end of each half cycle to allow the flow through the column to stop. Plasmids are captured by the DEAE anion exchange column.
5. Vacuum Wash. The columns are transferred and placing into a vacuum wash station. Move pump down to wash reservoir and aspirate 10 mL of wash buffer.
   Then aspirate 20 mL of air at 375 mL/min. Expel 20 mL air at 375 mL/min Repeat for 5-10 aliquots by several and ejection of columns and tips. Alternately, in other embodiments, wash is pulled through the tips only using the vacuum.
6. Elute. Plasmid is captured in a TRIS buffer. The elution volume may be 5, 10, or 20 mL depending on the recovery required. Lower elution volumes increase the concentration of the recovered plasmid. Higher elution volumes increase the total mass of the plasmid recovered.

### Example 2 - Nozzles with increased diameter sealing protrusions.

Three types of tight-fitting nozzles used for in examples. A first type nozzle was used in the work described in example 1 and example 3. In this example, the protrusion was a single increase in diameter at the top part of the pipette tip with a diameter of 20.4 mm. The nozzle diameter where there was no protrusion and where there was no pipette column sealing was 19.8 mm.

The second generation prepared had a 20.6 mm protrusion fitting a little lower down the nozzle. The nozzle diameter where there was no protrusion and where there was no pipette column sealing was 19.8 mm. This nozzle also was used in the example described in example 1.

The third embodiment was the dual ridge protrusion with the top ridge diameter of 20.3 mm and the bottom ridge of 20.2 mm. The nozzle diameter where there was no protrusion and where there was no pipette column sealing was 19.8 mm. Even though the diameter is smaller than the second embodiment, the force required for remove was the greatest of the three embodiments. This embodiment was also used in the example described in example 1.

Of the three generation designs, the first generation design seals well and is the easiest to remove. The third generation design is the best for sealing but is the hardest to remove.

### Example 3 - Polypeptide desalting

The work described here was performed with an instrument having tight sealing nozzles described as the first embodiment described in Example 2.

### Methods

20 mL pipette tip columns were cut to the 3 mL graduation mark and a screen was attached. 0.5, 1 or 2 grams of C18 resin was loaded into the pipette tip. These masses of resin correspond to 1, 2 or 4 mL of resin. The columns were washed with 190 proof ethanol and the bed was dried under vacuum. A top screen was attached to create a packed bed column. Resins tested included Isolute C18 UC (Biotage, 9220-0500), Isolute C18 EC (Biotage, 9221-0100), MFC18 (Biotage, 240-0005), Sep-Pak (Waters, WAT043350) and C18-reversed phase silica gel (Sigma, 60757-50G).

Columns were submerged into 20 mL of wetting solution consisting of 100% acetonitrile. The columns were wetted using 4 back-and-forth cycles of 12 mL at a flow rate of 400 mL per minute and a 60 second pause at the end of each aspirate and each dispense. The columns were conditioned in a solution of 20 mL of 0.1% TFA using 4 back-and-forth as described above. A peptide standard consisting of BSA digested by trypsin was spiked into 10 mL of 0.1% TFA to a final concentration of 1 or 2 mg/mL. Columns were submerged into the sample and 24 capture cycles of 9 mL at a flow rate of 400 mL per minute and a 60 second pause at the end of each aspirate and each dispense was used to capture the peptide. The columns were washed with three successive aliquots of 3 mL of 0.1% TFA using 4 back-and-forth cycles. The peptides were eluted by applying 3 mL solution of 40% acetonitrile to the top of the column and the flow through was collected.

Samples were analyzed by UV/Vis absorbance using a NanoDrop spectrophotometer and polyacrylamide gel electrophoresis.

### Results

### Small Scale Purifications Exhibit Little Resin to Resin Variability

500 mg of five different resins was packed to columns and used to screen for resin that exhibited the highest selectivity and yield for peptide. For each column, a sample of 10 mg of peptide was spiked into 5 mL of capture buffer and was captured by 32 cycles followed by wash and elution. The purification was performed in duplicate. The Nanodrop was used to analyze the flow through and elution. Note that sample and sample buffer contain impurities that absorbed UV, which affected the accuracy of the flow through analysis. However, the analysis revealed trends that are useful in method development.

The flow through data and elution data showed some variability from column to column which was expected for a screening experiment. Without considering the variability, there was virtually no difference in capture performance or elution between the various resins (Table 1).

MFC18 was chosen for subsequent scale-up method development due to low replicate variability.

**Table 1: Small Scale Resin Screen**

| **Sample** | **Replicate #** | **Flow through (mg/mL)** | **% capture** | **Recovered (mg)** | **% recovered** |
|---|---|---|---|---|---|
| MFC18 | 1 | 0.624 | 33 | 8.8 | 88 |
| MFC18 | 2 | 0.707 | 37 | 8.9 | 89 |
| C18 UC | 1 | 0.694 | 36 | 7.1 | 71 |
| C18 UC | 2 | 0.471 | 25 | 8.4 | 84 |
| C18 EC | 1 | 0.417 | 22 | 8.7 | 87 |
| C18 EC | 2 | 0.628 | 33 | 7.7 | 77 |
| Sep-Pak | 1 | 0.419 | 22 | 8.4 | 84 |
| Sep-Pak | 2 | 0.566 | 30 | 8.7 | 87 |
| Fluka | 1 | 0.626 | 33 | 7.7 | 77 |
| Fluka | 2 | 0.680 | 36 | 7.8 | 78 |

### Resin Scale-up and Impaired Flow

MFC18 was scaled up to 2 mg column for subsequent method development. However, a flow problem was observed. The MFC18 columns were unable to fully wet and condition, which resulted in low performance. The increased resin volume revealed that back pressure increased disproportionate to what was expected. The five resins tested in small scale were re-tested for back pressure when increasing the amount loaded from 500 mg to 2 g. From these studies, the C18 UC exhibited the lowest back pressure and was the best candidate for scale up.

### Efficient Recovery is Scalable

The optimized method was further tested to determine if the separation would work for larger sample volumes where increased mass recoveries are needed. 38 mg of peptide was spiked into 20 mL of capture buffer. The purification using Isolute (Biotage, 9220-0500) was performed in duplicate. 1 µL was removed and analysized by NanoDrop after 8 and 32 capture cycles to assess the capture completion. The Elution was analyzed by NanoDrop.

About 80% of the peptide was captured after 8 cycles and his was improved to about 90% after 32 cycles. The captured peptides were fully recovered during the elution where around 34 mg of the original 38 mg was measured.

**Table 2: Recovery of plasmid**

| **Sample ID** | **Protein Concentration (mg/mL)** | **Elution Vol (mL)** | **Yield (mg)** |
|---|---|---|---|
| Input | 1.905 | 20 | 38.1 |
| Left FT 8 cycles | 0.736 | 10 | 7.36 |
| Right FT 8 cycles | 0.848 | 10 | 8.48 |
| Left FT 32 cycles | 0.560 | 10 | 5.60 |
| Right FT 32 cycles | 0.633 | 10 | 6.33 |
| Left Elute | 2.927 | 12 | 35.124 |
| Right Elute | 2.873 | 12 | 34.476 |

## Claims

1. An automated separation system comprised of a liquid handling device and at least one pipette tip column, wherein the liquid handling device is equipped with one or more, such as two or more nozzles, each nozzle being arranged to receive a pipette tip column, and means for applying either positive or negative pressure enabling aspiration and dispensing into and out of each pipette tip column, in which system each nozzle has been provided with at least one annular protrusion.

2. A system according to claim 1, wherein each nozzle is provided with at least two annular protrusions both of which are arranged in sealing engagement with a mounted pipette tip column capable of holding a liquid volume of at least about 20 mL, such as in the range of about 20 to about 40 mL of liquid.

3. A system according to claim 1 or 2, wherein each pipette tip column is evenly tapered and arranged to provide a tight seal between the inner surface of the pipette tip column and the nozzle.

4. A system according to any one of the preceding claims, wherein the seal between each nozzle and pipette tip column is arranged to maintain a pressure or vacuum sealing for 5 minutes or greater with less than 5% pressure or vacuum loss.

5. A system according to any one of the preceding claims, wherein each pipette tip column is mountable to a nozzle using a force in the range of from about 50N to about160N.

6. A system according to any one of the preceding claims, wherein each pipette tip column is releasable by ejection using a force in the range of from about 50N to about 160N.

7. A system according to any one of the preceding claims, wherein said means for applying pressure to the pipette tip column(s) is provided by an electrical motor.

8. A system according to any one of the preceding claims, which comprises at least 2 independently arranged pipette tip columns, such as two to four columns.

9. A system according to any one of the preceding claims, wherein each pipette tip column comprises packed separation media, such as chromatography media, solid phase extraction (SPE) media or supported liquid extraction (SLE) media.

10. A method of separating a biomolecule from a liquid sample using the system according to any one of claims 1-9, wherein the sample is aspirated into each such packed pipette tip column; biomolecules of the aspirated liquid sample are allowed react with the separation media for a period of time; and the liquid sample comprising any unreacted biomolecules is dispensed from the pipette tip column.

11. A method according to claim 10, which comprises an additional step of aspirating an eluent into each packed pipette tip column; allowing the eluent to release biomolecules from the separation media; and dispensing the eluent including released biomolecules from the pipette tip column.

12. A method according to claim 10 or 11, wherein the separated biomolecules are selected from the group consisting of proteins; peptides; and nucleic acids, such as linear DNA, linear RNA or plasmids; or fragments or fusions thereof.

13. A method according to any one of claims 10-12, wherein a positive pressure of 3-5psi, such as 4-5 psi, is applied to the column without substantially impairing the sealing of each nozzle to its respective pipette tip column.

14. A kit for separating a biomolecule from a liquid sample using a separation system according to any one of claims 1-9, which kit comprises a 20-40 mL pipette tip column packed with chromatography, supported liquid extraction (SLE) or solid phase extraction (SPE) media and, in a separate compartment, written instructions for performing such separation.

15. A kit according to claim 14, which includes, in separate compartments, one or more of an equilibration buffer; a wash liquid; and an eluent.
